# EUROPEAN PATENT SPECIFICATION

(11) **EP 2 757 721 B1**
(45) Date of publication and mention of the grant of the patent: **11.03.2015**
(21) Application number: 13305052.6
(22) Date of filing: 17.01.2013
(51) Int. Cl.: H04L 1/00, H04L 1/18

(54) **Mechanism for packet FEC optimization**
Mechanismus für Paket-FEC-Optimierung
Mécanisme pour l'optimisation FEC de paquets

(43) Date of publication of application: 23.07.2014
(73) Proprietor: ALCATEL LUCENT, 92100 Boulogne-Billancourt (FR)
(72) Inventor: Löhr, Jürgen, 70190 Stuttgart (DE)
(74) Representative: Wetzel, Emmanuelle

(56) References cited:
- US-A1- 2007 183 323
- US-B1- 6 373 842
- US-B1- 7 739 580

## Description

The document relates to a method of operating a communication network comprising a data source and a data sink. Further, the document relates to a data source and a data sink. In particular, the document relates to the optimization of a data packet stream comprising payload data packets and Forward Error Correction (FEC) packets for transmission from the data source to the data sink.

Packet FEC (PFEC) may be used to recover from payload data packet loss in a communication network. PFEC periodically adds, at a data source, FEC packets to a payload data packet stream. The resulting data packet stream comprising the payload data packets and the added FEC packets is transmitted from the data source to a data sink via a communication network path of the communication network. In case that one or several payload data packets of the data packet stream are lost during transmission, the lost payload data packet(s) can be reconstructed at the data sink based on the received payload data packets and FEC packets of the data packet stream.

PFEC may be applied in two different ways. First, the FEC packets may be generated at the data source based on a fixed number ("block size") of payload data packets. That is, each FEC packet may be calculated from a fixed number of payload data packets. Second, the FEC packets may be generated at the data source based on a variable number of payload data packets ("generation on the fly"). That is, a number of payload data packets based on which a first FEC packet is calculated may differ from a number of payload data packets based on which a second FEC packet is calculated. The second approach offers increased flexibility, however also demands increased hardware capacities, in particular buffer capacities and computation resources at the data source and the data sink. Since at least theoretically buffer sizes at the data source and the data sink have to be infinite in order to cover all possible communication network failure scenarios, the buffer sizes at the data source and the data sink have to be at least very large in order to cover the majority of communication network failure scenarios in reality.

US 2007/0183323 A1 discloses the implementation of selective redundancy for voice over internet transmissions.

It is desirable to provide a method of operating a communication network using PFEC on the fly in which the disadvantage of large buffer sizes at the data source and the data sink can be avoided.

According to an aspect, a method of operating a communication network is provided, the communication network comprising a data source and a data sink which are connected with each other via a communication network path. The method comprises storing data packets (payload data packets) of a first data packet stream which is received or generated at the data source in a buffer of the data source. The stored data packets are subjected to a Forward Error Correction, FEC, process. Further, the method comprises converting the first data packet stream into a second data packet stream comprising data packets of the first data packet stream and FEC packets, wherein a number of data packets of the first data packet stream based on which a FEC packet is calculated is variable. Typically, a data packet is stored in the buffer to be available for generation of FEC packets until a signal acknowledging the receipt or recovery of the data packet at the data sink is received at the data source. The second data packet stream is transmitted from the data source to the data sink. When a data packet of the first data packet stream is involved in the FEC process for a period of time which exceeds a predetermined first time threshold value, the data packet is no longer used for generating data packets of the second data packet stream and deleted from the buffer.

Since the number of data packets of the first data packet stream based on which a FEC packet is calculated is variable, on the fly PFEC is possible: for example, the number of data packets of the first data packet stream based on which a FEC packet is calculated may be increased if a number of outstanding acknowledgments of successful transmission of a data packet of the second data packet stream from the data source to the data sink increases; further, the number of data packets of the first data packet stream based on which a FEC packet is calculated may be decreased if a number of outstanding acknowledgments of successful transmission of a data packets of the second data packet stream from the data source to the data sink decreases. On the other hand, since payload data packets which are stored in the buffer of the data source longer than a predetermined period of time (first time threshold value) are

deleted from the buffer of the data source, buffer sizes at the data source can be kept below a reasonable level.

The first time threshold value may depend on the type of application due to which the second data packet stream is transmitted from the data source to the data sink. That is, the first time threshold value may be selected based on the application type, or change after the type of application has changed. The application that generates or processes the payload data may at least partly be executed at the data source and/or at least partly be executed at the data sink and/or at least partly be executed at a different communication network node (i.e. the functionality of an application may be distributed over a plurality of network nodes. For example, if the type of an application or a part of an application executed at the data source is a real time telephone application based on which a first user talks to a second user in real time, and if the second data stream is a data stream carrying corresponding voice data from the data source to the data sink, it may not be advantageous to store the voice data (i.e. the data packet of the first data packet stream) at the data source too long since then the data could not be used any more at the data sink anyway (since the real time chat has already moved on). In this case, it may be reasonable to set the first time threshold value to a comparatively small value. On the other hand, if the type of an application or a part of an application executed at the data source is a non real time application where it is not so important when the data packets of the second data packet stream arrive at the data sink (e.g. if HTML data is downloaded by a browser application), it may be reasonable to set the first time threshold value to a comparatively high value. The first time threshold value may also be set according to the size of the buffer of the data source. That is, the first time threshold value may be proportional, e.g. directly proportional, to the size of the data source. In this way, a fixed source buffer size implies a maximum possible value for the first time threshold value.

In case that the first data packet stream is received at the data source, i.e. in case that the first data packet stream is not generated by the data source itself (but by another data communication node connected to the data source), time stamp information may be added to each data packet of the first data packet stream at/after reception at the data source. The time stamp information may indicate the time when the data packet is received at the data source or a time related thereto. Data packets of the first data packet stream stored in the buffer at the data source may be deleted from the buffer when a difference between the time indicated by the time stamp information and the current time exceeds the first time threshold value. In this way, a transparent mechanism is provided in order to manage the storage of the data packets of the first data packet stream at the data source. Of course, time stamp information may also be added if the first data packet stream is generated at the data source, e.g. according to the order of generation.

According to an aspect, the method further comprises receiving the second data packet stream at the data sink, and storing the data packets of the second data packet stream in a buffer of the data sink. The stored data packets are subjected to a FEC process, thereby converting the second data packet stream into a third data packet stream comprising received data packets of the second data packet stream and data packets reconstructed by the FEC process. When a data packet of the second data packet stream is stored in the buffer of the data sink and is involved in the FEC process for a period of time which exceeds a predetermined second time threshold value, the data packet may no longer be used for generating data packets of the third data packet stream and deleted from the buffer. The third data packet stream may, under ideal circumstances, correspond to the first data packet stream with respect to content and order of the data packets in case that all data packets of the second data packet stream are transmitted without loss/corruption from the data source to the data sink, or in case that all lost/corrupted data packets can be restored at the data sink in a sufficiently quick manner. Generally, however, due to the loss/corruption of second data packets, some data packets may be missing in the third data packet stream. Depending on the application or type of application, the order of the data packets of the third data packet stream may be changed, compared to that of the first data packet stream.

Since the number of data packets of the second data packet stream based on which a data packet of the second data packet stream is reconstructed at the data sink is variable, on the fly PFEC is possible in the embodiments of the method. On the other hand, since data packets of the second data stream which are stored in the buffer of the data sink longer than a predetermined period of time (second threshold value) are deleted from the buffer of the data sink, buffer sizes at the data sink can be kept below a reasonable level.

The first threshold value may be equal to the second threshold value. However, this is not necessarily the case, and individual values may be chosen for the first threshold value compared to the second threshold value depending on the application.

The third data packet stream may be a data stream used as input of an application running at the data sink, or sent to a further communication node of the communication network. Likewise, the first data packet stream may be a data stream output by an application running on the data source, or received from a further communication node of the communication network.

The second time threshold value may be depending on the type of application due to which the second data packet stream is transmitted from the data source to the data sink. That is, the second time threshold value may be set depending on the application type, or changed after the type of application has changed. For example, if the type of an application or a part of an application executed at the data sink is a real time video application, and if the second data stream is a data stream carrying corresponding video data from the data source to the data sink, it may not be advantageous to store the video data (i.e. the data packet of the second data packet stream) at the data sink too long since then the data could not be used any more at the data sink anyway (since the real time video stream has already moved on in time). In this case, it may be reasonable to set the second time threshold value to a comparatively small value. On the other hand, if the type of an application or a part of an application executed at the data sink is a non real time application (e.g. a batch file transfer application) in which it is not so important when the data packets of the second data packet stream arrive at the data sink, it may be reasonable to set the second time threshold value to a comparatively high value.

Time stamp information may be added to each data packet of the second data packet stream at/after reception at the data sink, wherein the time stamp information indicates the time when the data packet of the second data packet stream is received at the data sink or a time related thereto. Data packets of the second data packet stream stored in the buffer at the data sink are deleted from the buffer when a difference between the time indicated by the time stamp information and the current time exceeds the second time threshold value. In this way, a transparent mechanism is generated for handling the storage of the data packets of the second data packet stream at the buffer of the data sink. The second time threshold value may also be set according to the size of the buffer of the data sink. That is, the second time threshold value may be proportional, e.g. directly proportional, to the size of the data sink. In this way, a fixed data sink buffer size implies a maximum possible value for the second time threshold value.

The data sink may inform (e.g. via control signals or messages) the data source which of the data packets of the second data packet stream stored in the buffer of the data sink has been deleted from the buffer, or which of the data packets of the second data packet stream which has not yet been received by the data sink does no longer need to be transmitted from the data source to the data sink. The data source may respond on this information in various ways:
For example, the data source may delete a data packet stored in the buffer of the data source corresponding to the data packet of the second data packet stream which has not yet been received by the data sink, but does no longer need to be transmitted from the data source to the data sink or has been deleted from the buffer of the data sink. In other words, if data packets are no longer needed at the data sink, corresponding data packets are deleted from the buffer of the data source. In this way, the contents buffer at the data source and the buffer at the data sink are kept in synchronization with each other.

Alternatively or additionally, the data source may delete data packets stored in the buffer of the data source which are, with regard to the first data packet stream, older in time than a data packet of the first data packet stream which corresponds to the data packet of the second data packet stream deleted from the buffer at the data sink. In other words, if a data packet is no longer needed at the data sink, previous data packets which have been stored in the buffer of the data source before storing the data packet in the buffer of the data source corresponding to the data packet deleted from the buffer of the data sink, are deleted from the buffer of the data source.

Alternatively or additionally, the data source may delete data packets stored in the buffer of the data source which serve to generate FEC packets intended to restore second data packets at the data sink which are, with regard to the corresponding data packets of the first data packet stream, older in time than the data packet of the second data packet stream which has been deleted from the buffer at the data sink or which does no longer need to be transmitted from the data source to the data sink. In other words, the data source is caused to terminate the generation of FEC packets concerning data packets which do no longer need to be transmitted from the data source to the data sink anyhow.

Alternatively or additionally, the data source may delete FEC packets stored in the buffer of the data source which serve to restore data packets of the second data packet stream at the data sink which are, with regard to the corresponding data packets of the first data packet stream, older in time than a data packet of the second data packet stream which does not need to be transmitted from the data source to the data sink any more. In other words, the data source is caused to terminate the transmission of FEC packets concerning data packets which do no longer need to be transmitted from the data source to the data sink, since there would not be any use at the data sink for these FEC packets.

The data sink may inform the data source which of the data packets of the second data packet stream stored in the buffer of the data sink has been deleted or is no longer needed for transmission by indicating that the data packet of the second data packet stream has been successfully received or restored at the data sink. In this way, existing mechanisms can be used in order to achieve the desired effect, i.e. no new functionality has to be defined.

According to an aspect, a data source connectable to a data sink via a communication network path of a communication network is provided, comprising a buffer unit adapted to store data packets of a first data packet stream and a processing unit connected to the buffer unit and adapted to subject the stored data packets to a FEC process. The FEC process converts the first data packet stream into a second data packet stream comprising data packets of the first data packet stream and FEC packets. A number of data packets of the first data packet stream based on which a FEC packet is calculated is variable. The data source further comprises a transmitting unit adapted to transmit the second data packet stream from the data source to the data sink via the communication network path. The processing unit is adapted to delete, when a data packet of the first data packet stream is involved in the FEC process for a period of time which exceeds a predetermined first time threshold value, the data packet from the buffer. The data source may further comprise a receiving unit adapted to receive control signals or messages which acknowledge reception of the data packets of the second data packet stream at the data sink.

According to an aspect, a data sink connectable to a data source via a communication network path of a communication network is provided, comprising a receiving unit adapted to receive a second data packet stream from the data source via the communication network path, and a buffer unit connected to the receiving unit and adapted to buffer the received data packets of the second data packet stream. The data sink further comprises a processing unit connected to the buffer unit and subjecting the stored data packets to a FEC process. The FEC process converts the second data packet stream into a third data packet stream comprising received data packets of the second data packet stream and data packets reconstructed by the FEC process. A number of data packets of the second data packet stream based on which a reconstruction of a data packet of the second data packet stream is reconstructed is variable. The processing unit is adapted to delete, if a data packet of the second data packet stream is involved in the FEC process for a period of time which exceeds a predetermined second time threshold value, the data packet from the buffer.

Each FEC packet may be generated at the data source by logically connecting (i.e. applying a logical, e.g. bit-wise XOR operation or operations over finite fields to) payload data packets of the data packets of the first data packet stream using a bitwise operation, e.g. an XOR-operation. However, also other techniques may be applied to generate FEC packets such as an operation over finite fields with the payload information as parameters. Likewise, data packets of the second data packet stream may be restored at the data sink by logically connecting payload data packets of the second data packet stream and at least one FEC packet being part of the second data packet using e.g. a XOR-operation.

Further, according to an aspect, a communication network is provided comprising a data sink and a data source according to embodiments. The communication network may further comprise network components like routers or switches.

The present invention may be applied e.g. to L2/L3 switched/routed communication networks. In L2/L3 switched/routed communication networks, payload data packet loss typically results from overflow of buffers (L2/L3 switch/router buffers) provided along a communication network path which connects the data source and the data sink with each other: after L2/L3 switch/router buffers have filled up due to congestion, payload data packets are dropped.

Also, according to an aspect, a computer program is provided adapted to carry out the method steps and/or to embody at least parts of the data source, the data sink, or the communication network according to embodiments of the present invention when being run on a computing device like a DSP, FPGA, ASIC, processor, or the like.

It should be noted that the above mentioned method aspects are applicable for the suggested network nodes such as data source and sink as well. Thus, all aspects disclosed for embodiments of the method can be combined with the suggested nodes to achieve similar effects and advantages.

These and other aspects of the invention will be apparent from and elucidated with reference to the embodiments described hereinafter, by way of example, with reference to the drawings.

In the following, embodiments will be explained by way of example while making reference to the accompanying drawings, wherein:
Fig. 1a, b shows a basic working principle of Packet FEC;
Fig. 1c shows a basic working principle of On The Fly Packet FEC;
Fig. 2 shows a communication network according to an embodiment;
Fig. 3 shows a method of operating a communication network according to an embodiment;
Fig. 4 shows a data source according to an embodiment;
Fig. 5 shows a data sink according to an embodiment;
Fig. 6 shows an example for a method of operating a communication network according to an embodiment; and
Fig. 7 shows an example for a method of operating a communication network according to an embodiment.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system or apparatus, and vice versa.

Packets transported via a L2 or L3 network, e.g. an operator's L2 network or the (L3) Internet, may be lost e.g. due to buffer overflow in intermediate switches or routers. This loss negatively impacts the transported packet stream and the resulting user experience, e.g. a video service or the performance of a TCP session.

Packet FEC (PFEC) is a mechanism to recover from certain scenarios of loss of packets of a data packet stream between a PFEC source and a PFEC sink, with the loss occurring while the packet are transported via a lossy packet network.

Conventional PFEC schemes use a fixed source block (i.e. a fixed amount of data packets of a data stream to be transmitted from a PFEC source to a PFEC sink that are protected together by adding redundancy or repair packets (FEC packets)). These schemes may implement adaptation of the amount of added redundancy depending on the packet loss ratio (PLR). While being adaptive to changing PLR, these schemes are still restricted by being effective only for certain loss patterns (e.g. for bursty losses, statistical losses, etc.), but not for all loss patterns.

On-the-fly PFEC schemes remove this restriction by applying PFEC to a non-fixed source block. The restriction of these schemes is that they assume potentially infinite resources (infinite memory for buffers and infinite processing power at the PFEC source and the PFEC sink), and add potentially infinite latency for recovery of lost packets.

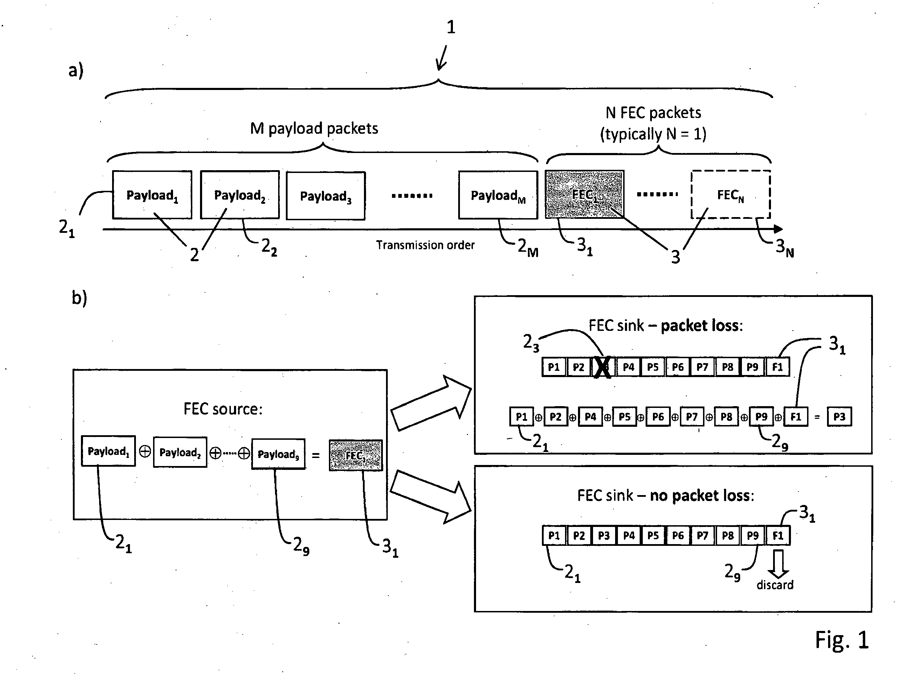

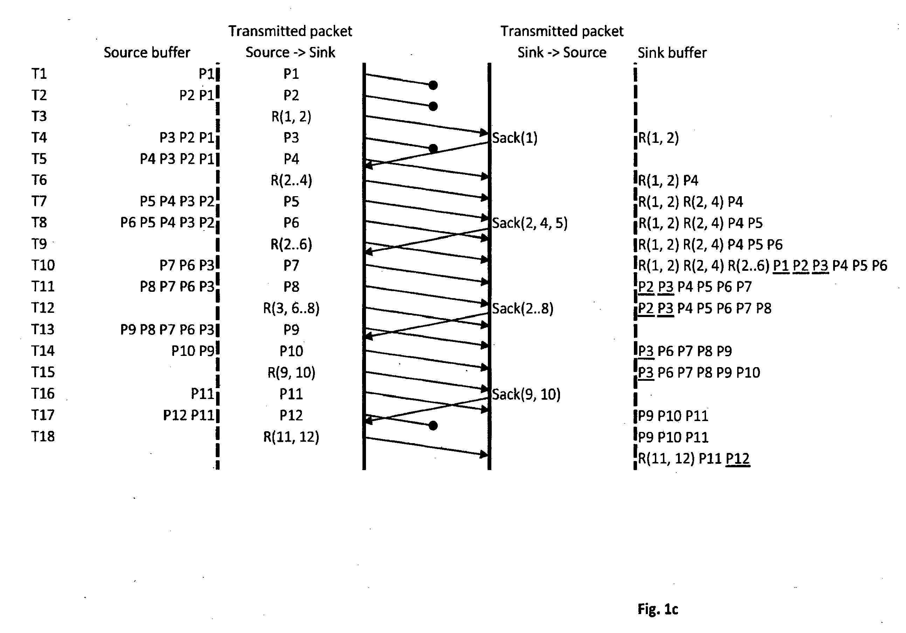

Fig. 1 shows a basic mechanism of PFEC. Fig. 1a shows a data packet stream 1 to be transmitted from a data source to a data sink, wherein the data packet stream 1 includes one or more payload data packets and one or more FEC packets. Here, the data packet stream 1 comprises M payload data packets 2 and N FEC packets 3. In Fig. 1a, the transmission order of the payload data packets 2 and the FEC packets 3 is indicated: First, payload data packet 2₁ is transmitted, then payload data packet 2₂, etc., until finally payload data packet 2_{M} has been transmitted. After this, FEC packet 3₁ is transmitted, then FEC packet 3₂, until finally FEC packet 3_{N} has been transmitted. In the following, it is assumed that for example M is 9, and that N is 1. Of course, also other values could be chosen for M and N. The left part of Fig. 1b shows how a FEC packet may be created: a plurality of payload data packets 2 (here: M = 9 payload data packets) are logically connected with each other (for example by a logical, e.g. bit-wise XOR connection), thereby obtaining FEC packet 3₁. After having thus created FEC packet 3₁ in the data source (thus also referred to as "packet FEC source"), payload data packets 2₁ to 2₉, followed by FEC packet 3₁, are transmitted in this order (or in a different order) from the data source to the data sink. Alternatively, payload data packets 2₁ to 2₉ may be transmitted already before, after being considered in the creation of the FEC packet 3₁. At the data sink, as shown in the right part of Fig. 1b, two cases can be distinguished: Should one of the payload data packets 2₁ to 2₉ be lost during transmission from the data source to the data sink, the FEC packet 3₁ is used in order to restore the lost payload data packet. In the upper part of Fig. 1b, it is assumed that the third payload data packet 2₃ (P3) is lost during transmission. In this case, the lost payload data packet 2₃ can be restored by logically connecting the correctly transmitted payload data packets 2₁, 2₂, and 2₄ to 2₉ with the FEC packet 3₁ (for example by a logical, e.g. bit-wise XOR connection). In case that no payload data packet 2 is lost during transmission from the data source to the data sink, the FEC packet 3₁ is discarded at the data sink (thus also referred to as "packet FEC sink"), as shown in the lower part of Fig. 1b.

The values for M and N may be dimensioned according to parameters of the packet stream 1, the properties of the communication network path 23, particularly its packet loss properties (probability and loss pattern), or any combination thereof.

When using On The Fly Packet FEC, the parameter M ("block size") is dynamically varied at the data source 21 during operation, as illustrated in Fig. 1c:
Figure 1c shows a basic working principle of On The Fly Packet FEC. At time instance T1, a payload data packet P1 is sent from the data source 21 to the data sink 22. However, data packet P1 is lost during transmission. Payload data packet P1 is stored in a buffer unit of the data source 21. At time instance T2, payload data packet P2 is sent from the data source 21 to the data sink 22. However, also data packet P2 is lost during transmission. At this time, data packets P1 and P2 are stored in the buffer unit of the data source 21. At time instance T3, a redundancy packet (FEC packet) R(1,2) is generated at the data source 21 based on payload data packets P1 and P2 (M=2) and sent from the data source 21 to the data sink 22 where it is received and stored in a buffer unit of the data sink 22. At time instance T4, data packet P3 is sent from the data source 21 to the data sink 22, however gets lost during transmission. At time instance T4, data packets P1 to P3 are stored in the buffer unit of the data source 21.

At time instance T5, payload data packet P4 is sent from the data source 21 to the data sink 22 and is received at the data sink 22 where it is stored in the buffer unit of the data sink 22. At time instance T5, data packets P1 to P4 are stored in the buffer unit of the data source 21. Before time instance T6, an acknowledgement message Sack(1) sent out by the data sink 22 is received at the data source 21 acknowledging that redundancy data packet R (1, 2) has been successfully received at the data sink. In response thereto, payload data packet P1 is deleted from the buffer unit of the data source 21 before time instance T6. At time instance T6, a redundancy data packet R(2...4) is generated at the data source and sent to the data sink 22 where it is received and stored in the buffer unit of the data sink 22. Since payload data packet P1 has been deleted from the buffer unit of the data source 21, redundancy data packet R(2...4) is only calculated based on payload data packets P2, P3, and P4 (M=3). At time instance T7, payload data packet P5 is sent from the data source 21 to the data sink 22, where it is stored in the buffer unit of the data sink 22. At time instance T7, data packets P2 to P5 are stored in the buffer unit of the data source 21. At time instance T8, payload data packet P6 is sent from the data source 21 to the data sink 22 and stored in the buffer unit of the data unit 22. At time instance T8, data packets P2 to P6 are stored in the buffer unit of the data source 21. At time instance T9, a redundancy data packet R (2...6) is calculated based on payload data packets P2 to P6 (M=5) stored in the buffer unit of the data source 21. The redundancy data packet R (2...6) is sent to the data sink 22 and stored in the buffer unit of the data sink 22. Before time instance T10, an acknowledgement message Sack(2, 4, 5) sent out by the data sink 22 is received at the data source 21 acknowledging that that payload data packets P2, P4, and P5 have successfully received at the data sink 22. For this reason, payload data packets P2, P4, and P5 are deleted from the buffer unit at the data source 21 at time instance T10. Further, at time instance T10, a payload data packet P7 is sent from the data source 21 to the data sink 22 where is it stored in the buffer unit of the data sink 22. Also, at time instance T10, it is possible to restore payload data packets P1 to P3 at the data sink 22 using the payload data packets P4, P5, P6, and redundancy data packets R(1, 2), R(2...4), R(2...6). Thus, redundancy data packets R (1, 2), R (2...4), and R (2...6) are deleted from the buffer unit at the data sink 22 after restoring payload data packets P1 to P3. At time instance T11, payload date packet P8 is sent from the data source 21 to the data sink where it is received and stored in the buffer unit of the data source 22. At time instance T11, data packets P3, P6, P7, and P8 are stored in the buffer unit of the data source 21. At time instance T12, a redundancy data packet R (3, 6,...8) which is calculated based on the payload data packets P3, P6, P7, and P8 (M=4) is sent from the data source 21 to the data sink 22 where it is received, however not stored in the buffer unit of the data sink 22 since it is no longer needed for restoring payload data packets 3, 6, 7 and 8 at the data sink 22. At time instance T13, payload data packet P9 is sent from the data source 21 to the data sink 22 where is it stored in the buffer unit of the data sink 22. At time instance T13, data packets P3, P6, P7, P8, and P9 are stored in the buffer unit of the data source 21. Before time instance T14, an acknowledgement message Sack(2,...8) sent out by the data sink 22 is received at the data source 21 acknowledging that payload data packets P2 to P8 have been successfully received/restored at the data sink 22. As a consequence, payload data packets P3, P6, P7, and P8 are deleted from the buffer unit of the data source 21. Also, at time instance T14, since restored payload data packet P2 is no longer needed for restoring payload data packets at the data sink 22, it is deleted from the buffer unit at the data sink 22. Further, at time instance T14, payload data packet P10 is sent from the data source 21 to the data sink 22 wherein stored in the buffer unit of the data sink 22. At time instance T15, redundancy data packet R(9, 10) is generated at the data source 21 from payload data packets P9 and P10 and sent to the data sink 22, however is not stored in the buffer unit of the data sink 22 since payload data packets P9, P10 have already been received at the data sink 22. In response to the reception of redundancy data packet R(9, 10) at the data sink 22, the data sink 22 deletes payload data packets P3, P6, P7, and P8 from the buffer unit since it recognizes that they are no longer needed for restoration, and informs the data source 21 that payload data packets P9, P10 have been correctly received by sending an acknowledgement message Sack (9, 10). At time instance T16, data packet P11 is sent from the data source 21 to the data sink 22 where it is stored in the buffer unit of the data sink 22. At time instance T17, payload data packet P12 is sent from the data source 21 to the data sink 22, however get lost during transmission. Since, the data source 21 gets, before time instance T18, the acknowledgement message Sack (9, 10) from the data sink 22 saying that payload data packets P9, P10 have been safely received, payload data packets P9 and P10 are deleted from the buffer unit of the data source 21. At time instance T18, redundancy data packet R(11, 12) is generated at the data source 21 from payload data packets P1 and P12 (M=2) and sent to the data sink 22, where it is stored in the buffer unit of the data sink 22.

As can be derived from Fig. 1c, the number of payload data packets and redundancy data packet stored in the buffer unit of the data sink 22 varies.

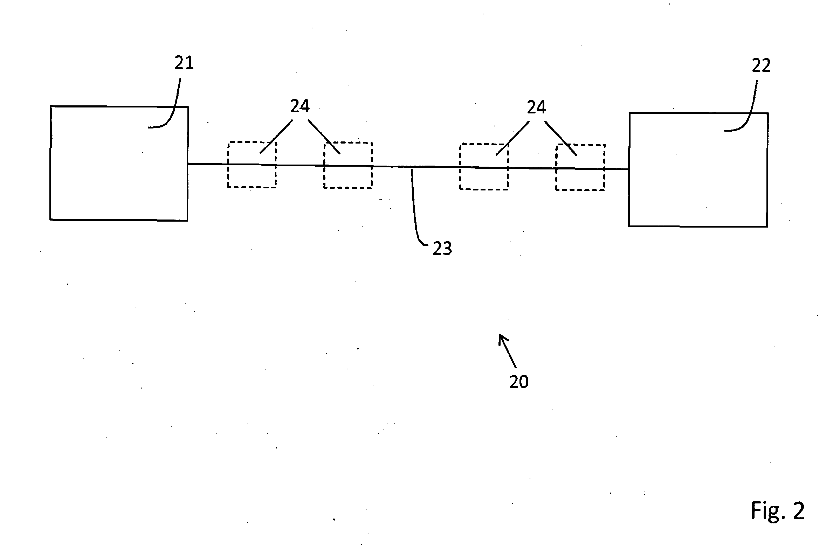

Fig. 2 shows a communication network 20 comprising a data source 21 and a data sink 22 which are connected with each other via a communication network path 23. Several buffers 24 may be arranged along the communication network path 23. The data source 21 and the data sink 22 may e.g. be network nodes which are configured to transmit and/or to send data packets over the communication network path 23. Typical examples for network nodes are IP routers (or L3 routers) or Ethernet switches (or L2 switches). The network nodes may be implemented using ASIC and/or FPGA and/or DSP and/or software on a processor. The buffers 24 are typically comprised within respective network nodes (e.g. IP routers or Ethernet switches) which are configured to forward data packets from the data source 21 to the data sink 22. The communication network path 23 is further adapted to communicate acknowledgement messages from the data sink 22 to the data source 21 acknowledging receipt of data packets at the data sink 22.

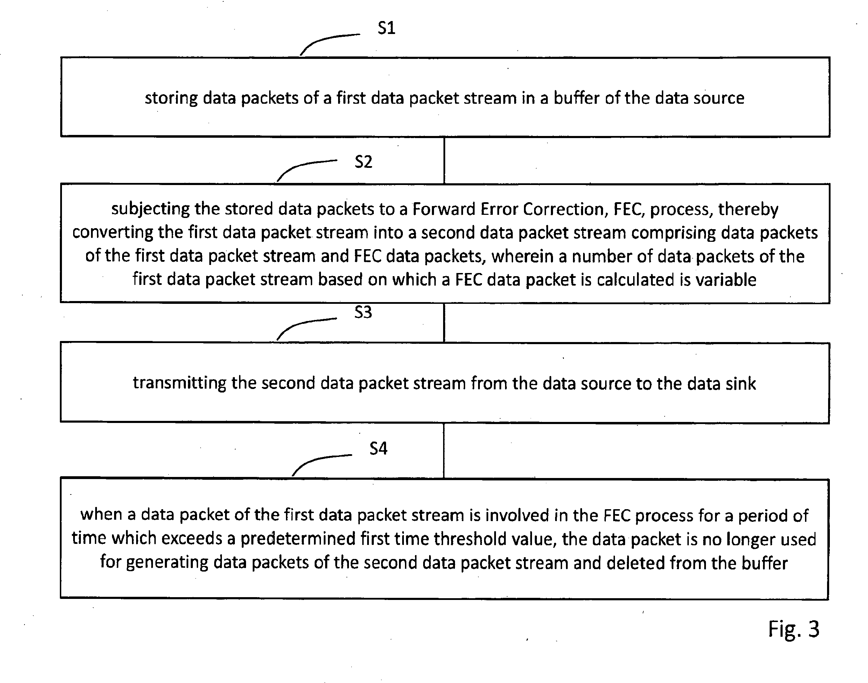

As shown in Fig. 3, the following method may be carried out in order to operate the communication network 20, in particular to operate the data source 21: At S1, data packets (payload data packets) of a first data packet stream are stored in a buffer of the data source. The data packets (payload data packets) of the first data packet stream may be generated by the data source 21 or received by the data source 21 using a (non shown) receiving unit. At S2, the stored data packets are subjected to a FEC process, thereby converting the first data packet stream into a second data packet stream comprising data packets of the first data packet stream and FEC packets, wherein a number of data packets of the first data packet stream based on which a FEC packet is calculated is variable (on the fly FEC process). At S3, the second data packet stream is transmitted from the data source 21 to the data sink 22. When a data packet of the first data packet stream is involved in the FEC process for a period of time which exceeds a predetermined first time threshold value, then, the data packet is no longer used for generating data packets of the second data packet stream and deleted from the buffer at S4. The steps shown in Fig. 2 need not be executed in the shown sequence. For example, steps S1 to S3 may be carried out in an arbitrary order. For example, steps S1 and S3 may be performed in parallel to enable a lower latency of processing.

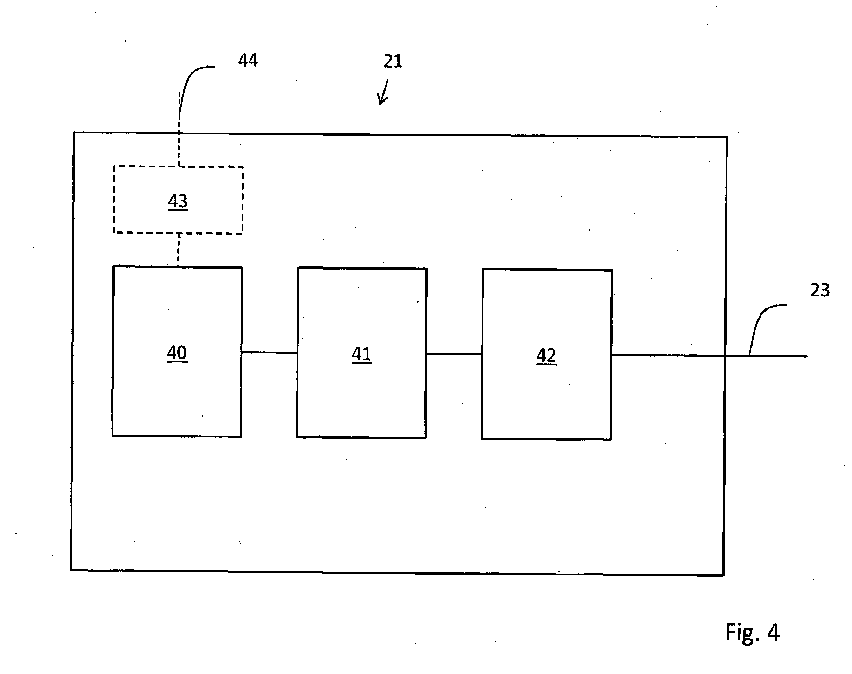

Figure 4 shows a possible embodiment of the data source 21 shown in Figure 2. The data source 21 comprises a buffer unit 40 adapted to store data packets of a first data packet stream and a processing unit 41 connected to the buffer unit 40 and adapted to subject the stored data packets to a FEC process, thereby converting the first data packet stream into a second data packet stream comprising data packets of the first data packet stream and FEC packets. A number of data packets of the first data packet stream based on which a FEC packet is calculated is variable. The data source 21 further comprises a transmitting unit 42 adapted to transmit the second data packet stream from the data source 21 to the data sink 22 via the communication network path 23. The processing unit 41 is adapted to delete, when a data packet of the first data packet stream is involved in the FEC process for a period of time which exceeds a predetermined first time threshold value, the data packet from the buffer unit 40. The transmitting unit 42 may further be adapted to receive acknowledgement messages from the data sink 22 via the communication network path 23 indicating which of the data packets of the second data packet stream have been successfully transmitted from the data source 21 to the data sink 22. In this case, unit 42 is typically called a transceiver unit.

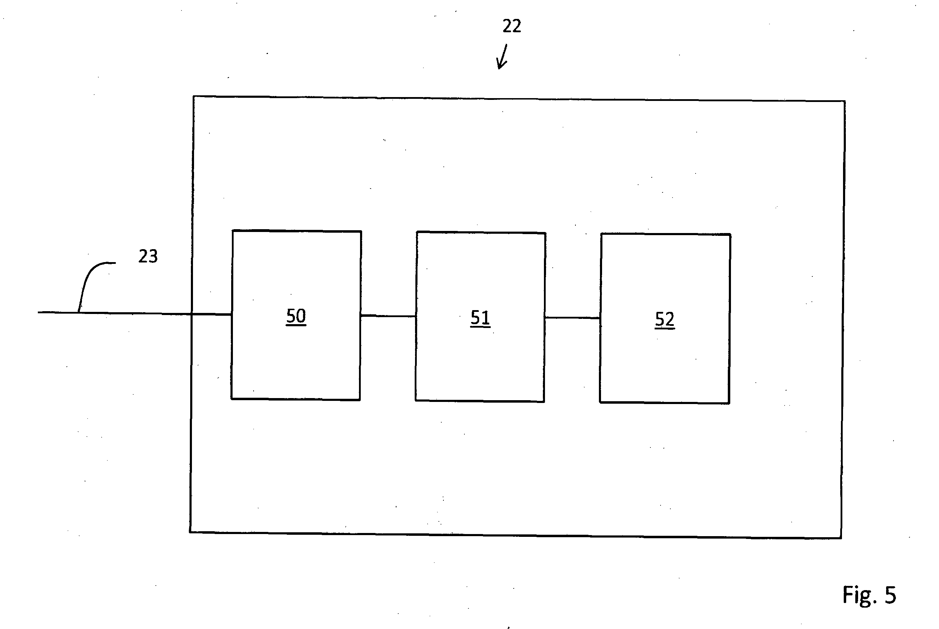

Figure 5 shows a possible embodiment of the data sink 22 shown in Figure 2. The data sink 22 comprises a receiving unit 50 adapted to receive a second data packet stream from the data source 21 via the communication network path 23, and a buffer unit 52 adapted to buffer the received data packets of the second data packet stream. The data sink 22 further comprises a processing unit 51 connected to the buffer unit 52 and the receiving unit 50 and being adapted to subject the stored data packets to a FEC process, thereby converting the second data packet stream into a third data packet stream comprising received data packets of the second data packet stream and data packets reconstructed by the FEC process. A number of data packets of the second data packet stream based on which a reconstruction of a data packet of the second data packet stream is reconstructed is variable. The processing unit 51 is adapted to delete, if a data packet of the second data packet stream is involved in the FEC process for a period of time which exceeds a predetermined second time threshold value, the data packet from the buffer unit 52. The receiving unit 50 may further be adapted to send acknowledgement messages from the data sink 22 via the communication network path 23 to the unit 42 of the data source 21 indicating which of the data packets of the second data packet stream have been successfully transmitted from the data source 21 to the data sink 22. In this case, unit 50 is typically called a transceiver unit. The data sink 22 may comprise a further transmitting unit (not shown) connected to the processing unit 51 and adapted to transmit data packets of the third data packet stream to a further network node (not shown) of the communication network which is ' connected to the further transmitting unit.

The first time threshold value may be varied in dependence on the type of application executed at the data source 21 due to which the second data packet stream is transmitted from the data source 21 to the data sink 22. Likewise, the second time threshold value may be varied in dependence on the type of application due to which the second data packet stream is transmitted from the data source 21 to the data sink 22.

Time stamp information may be added to each data packet of the first data packet stream at/after reception or generation at the data source 21. For example, a receiving unit 43 may be provided in the data source 21 which is connected to the buffer unit 40 and to a communication line 44 connecting the data source 21 to another communication node, wherein the receiving unit 43 receives the first data packet stream via the communication line 44, and stores the corresponding data packets in the buffer unit 40, from which they are retrieved for processing by the processing unit 41. The time stamp information provided by the receiving unit 43 to the data packets of the first data packet stream may indicate the time when the data packet is received/generated at the data source 21 or a time related thereto (e.g. a time having a defined offset with regard to the reception/generation time). Data packets of the first data packet stream stored in the buffer unit 40 at the data source 21 may be deleted from the buffer unit 40 when a difference between the time indicated by the time stamp information and the current time exceeds the first time threshold value.

Likewise, time stamp information may be added to each data packet of the second data packet stream after reception at the data sink 22, wherein the time stamp information indicates the time when the data packet of the second data packet stream is received at the data sink 22 or a time related thereto (e.g. a time having a defined offset with regard to the reception time). Data packets of the second data packet stream are stored in the buffer unit 52 at the data sink 22, from which they are retrieved for processing by the processing unit 51.

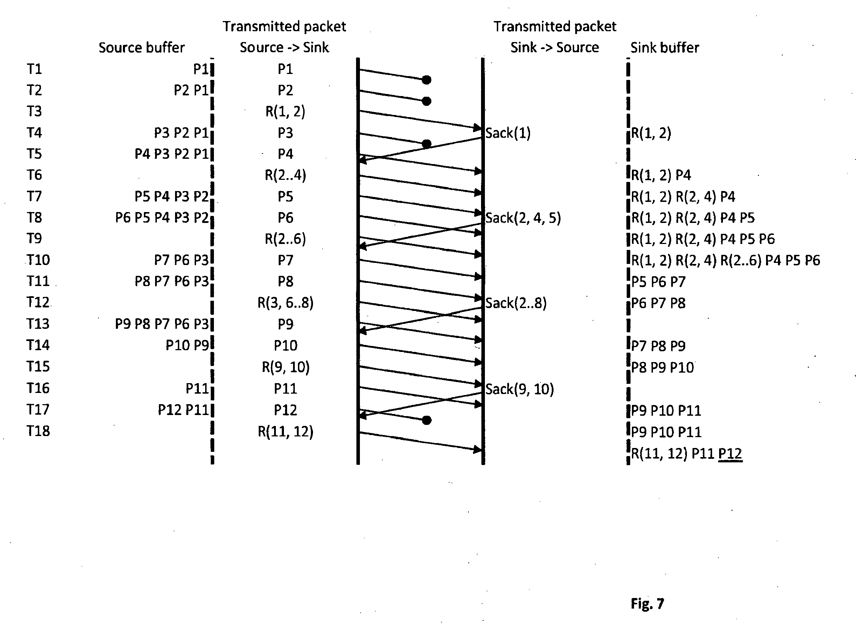

The data sink 22 may inform the data source 21 which of the data packets of the second data packet stream stored in the buffer unit 52 of the data sink 22 has been deleted from the buffer unit 52, or which of the data packets of the second data packet stream which has not yet been received by the data sink 22 does no longer need to be transmitted from the data source 21 to the data sink 22. For example, Fig. 7 shows a communication mechanism in which at most three data packets of a second data packet stream are simultaneously stored in the buffer unit 52 of the data sink 22. This is because storing more than three data packets simultaneously in the buffer unit 52 would imply that the data packets would be stored too long in the buffer unit 52, thereby violating the second time threshold value. That is, the oldest data packets are deleted from the buffer unit 52 if the number of simultaneously stored data packets would exceed three such that the number of simultaneously stored data packets is kept at a maximum of three. The deletion of the data packets in the buffer unit 52 of the data sink is communicated to the data source 21 using corresponding acknowledgment signals (which acknowledge reception of data packets of the second data packet stream at the data sink 22 although they have actually not received at the data sink 22). The data source 21 may react on this (acknowledging) information in various ways:

For example, the data source 21 may delete a data packet stored in the buffer unit 40 of the data source 21 corresponding to the data packet of the second data packet stream which has not yet been received by the data sink 22, but does no longer need to be transmitted from the data source 21 to the data sink 22 or has been deleted from the buffer unit 52 of the data sink 22. In other words, if data packets are no longer needed at the data sink 22, corresponding data packets are deleted from the buffer unit 43 of the data source 21.

Alternatively or additionally, the data source 21 may delete data packets stored in the buffer unit 40 of the data source 21 which are, with regard to the first data packet stream, older in time than a data packet of the first data packet stream which corresponds to the data packet of the second data packet stream deleted from the buffer unit 52 at the data sink 22. In other words, if a data packet is no longer needed at the data sink 22, data packets which have been stored in the buffer unit 40 of the data source 21 before storing the data packet corresponding to the data packet deleted from the buffer unit of the data sink 22, are deleted from the buffer unit 40 of the data source 21.

Alternatively or additionally, the data source 21 may delete data packets stored in the buffer unit 40 of the data source 21 which serve to generate FEC packets intended to restore second data packets at the data sink 22 which are, with regard to the corresponding data packets of the first data packet stream, older in time than the data packet of the second data packet stream which has been deleted from the buffer unit 52 at the data sink 22 or which does no longer need to be transmitted from the data source 21 to the data sink 22. In other words, the data source 21 is forced to terminate the generation of FEC packets concerning data packets which do no longer need to be transmitted from the data source 21 to the data sink 22 anyhow.

Alternatively or additionally, the data source 21 may delete FEC packets stored in the buffer unit 40 of the data source 21 which serve to restore data packets of the second data packet stream at the data sink 22 which are, with regard to the corresponding data packets of the first data packet stream, older in time than a data packet of the second data packet stream which does not need to be transmitted from the data source 21 to the data sink 22 any more. In other words, the data source 21 is forced to terminate the transmission of FEC packets concerning data packets which do no longer need to be transmitted from the data source 21 to the data sink 22, since there would not be any use at the data sink 22 for these FEC packets.

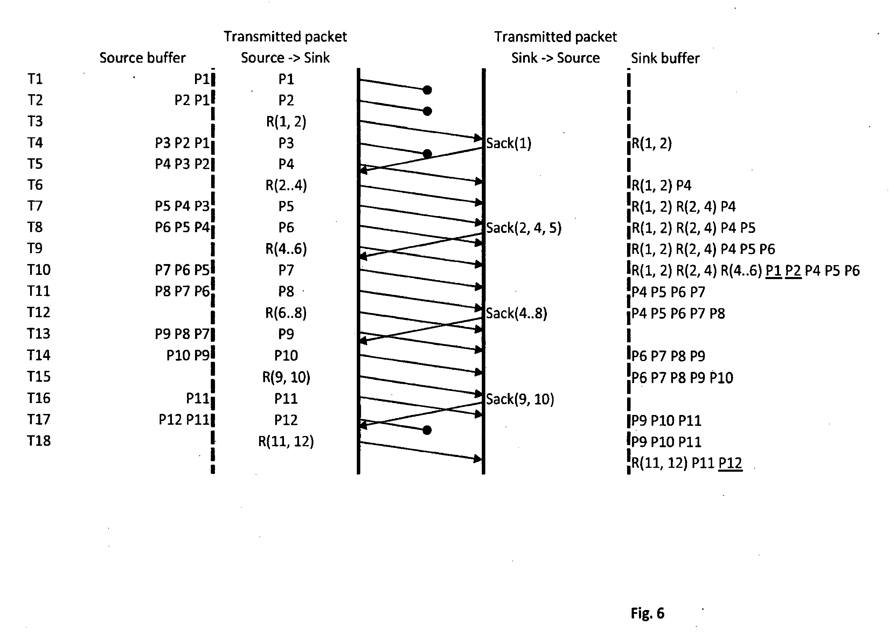

On the other hand, the data source 21 may delete data packets of a first data packet stream which are simultaneously stored in the buffer unit 40 of the data source 21 without using information from the data sink 22. For example, Fig. 6 shows a communication mechanism in which at most three data packets of a first data packet stream are simultaneously stored in the buffer unit 40 of the data source 21 since storing more than three data packets simultaneously in the buffer unit 40 would imply that the data packets would be stored too long in the buffer unit 40, thereby violating the first time threshold value. That is, older data packets are deleted from the buffer unit 40 if the number of simultaneously stored data packets would exceed three such that the number of simultaneously stored data packets is kept at a maximum of three.

The data sink 22 may inform the data source 21 which of the data packets of the second data packet stream stored in the buffer unit 52 of the data sink 22 has been deleted or is no longer needed for transmission by indicating that the data packet of the second data packet stream has been successfully received or restored at the data sink 22. In this way, existing mechanisms can be used in order to achieve the desired effect, i.e. no new functionality has to be defined in case that on-the-fly packet FEC functionality is already available (including a backward channel from the data sink 22 to the data source 21).

Figs. 6 and 7 show further examples for a method of operating a communication network according to an embodiment. Similar to Fig. 1c, the graph indicates the state of the communication process for time instants T1 to T18. The figures show the packets that are stored in the source and sink buffers for each time instant, and the packets that are transmitted from source to sink and vice versa. Packets P1 to P11 are payload data packets. Redundancy (FEC) packets are indicated with R(N,M) where N and M indicate the payload packets that are covered by the dynamic on-the-fly packet FEC packet R. Sack(X,Y) refers to an acknowledgment message covering data packets X to Y.

In the example of Fig. 6 at most three data packets of a first data packet stream are simultaneously stored in the buffer unit 40 of the data source 21. In the example of Fig. 7 at most three data packets of a second data packet stream are simultaneously stored in the buffer unit 52 of the data sink 22. Respective FEC packets and acknowledgment messages are generated and transmitted to the counterpart buffer unit. The centerpart of the graph shows which packets and messages are successfully transmitted and which packets and messages are lost. The operation of data source and data sink is as described above.

In the following description, further aspects of embodiments of the present invention will be explained.

Embodiments of the present invention describe mechanisms that make on-the-fly PFEC implementable (i.e. mechanisms which are still effective when using finite resources) and acceptable regarding the processing speed (i.e. mechanisms which enable to adjust an upper bound for added latency).

To remove the restrictions of on-the-fly PFEC, the following mechanisms may be used in arbitrary combination with each other (e.g. as extensions to already available on-the-fly PFEC schemes): a) A mechanism to specify a maximum acceptable latency that is introduced by the on-the-fly PFEC, as a way to parameterize its behavior; b) A mechanism to determine and remove packets in the PFEC source buffer that violate the maximum acceptable latency; c) A mechanism to determine and remove packets in the PFEC sink buffer that violate the maximum acceptable latency; and d) a mechanism for extended acknowledgement from the PFEC sink to the PFEC source. These mechanisms allow to implement on-the-fly PFEC with finite memory and finite processing resources, and to provide a maximum latency for packets, in particular when combined.

On-the-fly PFEC uses buffers (implemented e.g. by RAM (Random Access Memories)) a) to store payload packets for the purpose of computation of redundancy packets (at the PFEC source), and b) to store received and recovered payload packets and received redundancy packets for the purpose of reconstructing lost payload packets (at the PFEC sink). As a general rule, the bigger the buffers, the longer can packets be stored, the longer can lost bursts be that on-the-fly PFEC can recover from, and the longer the time can be until a lost packet can be reconstructed (i.e. resulting in higher latency). Thus, there is a direct relationship between buffer size and maximum introduced latency.

Possible realization of mechanism a): A parameter may be used to reflect a maximum latency, the value of which being e.g. a predetermined constant or a value determined during run-time depending on the PFEC implementation. The parameter value may be provided to both the PFEC source and the PFEC sink. In case of a run-time dependent adjustment, a user interface may be used (e.g. a software API (Application Programming Interface) allowing to set the parameter value, or a FPGA register allowing to set the parameter value) provided by the PFEC implementation. In case the parameter value is a predetermined constant, it may be hard-coded in the implementation (e.g. in software or in FPGA code). A combination of both approaches is possible, e.g. a predetermined maximum parameter value may be set (as a design constant), with the option to alter the maximum parameter value at run-time, e.g. to a smaller value. Due to the relation between buffer size and latency described above, the maximum possible value depends on the implemented buffer size. So a possible implementation is to derive the parameter value in dependence on the size of the buffer used by the data source and the data sink. Alternatively, different parameter values, i.e. different maximum latencies may be used for data source and data sink, respectively.

Possible realization of mechanism b): In order to provide a mechanism to determine and remove data packets in the PFEC source buffer that violate the maximum acceptable latency, each payload packet generated or received at the PFEC source may be explicitly or implicitly time stamped, thereby allowing to determine at any time after reception if the packet is stored in the buffer already for longer than the specified maximum acceptable delay. If this is the case, the packet may be removed from the buffer (as it cannot be delivered in time anymore), and may not be considered anymore for the computation of redundancy packets in the future.

Possible realization of mechanism c): In order to provide a mechanism to determine and remove packets in the PFEC sink buffer that violate the maximum acceptable latency, each payload data packet arriving at the PFEC sink may be explicitly or implicitly time stamped, allowing to determine at any time if it is stored in the buffer longer than the specified maximum acceptable delay (this very similar to the respective mechanism in the PFEC source). In addition, payload packets reconstructed at the PFEC sink out of other payload packets and redundancy packets may be appropriately time stamped, e.g. as an approximation of their potential arrival time, or with the time of their reconstruction, or any other appropriate way. If any of those packets is residing in the buffer of the data sink for longer than the maximum acceptable delay, it is removed from the buffer.

Possible realization of mechanism d): In order to provide an extended acknowledgement from PFEC sink to PFEC source, the basic acknowledgement mechanism that signals to the PFEC source which payload data packets (of the second data stream) have successfully arrived at the PFEC sink or have successfully been reconstructed there may be extended by means reflecting which payload data packets (of the second data stream) have been removed from the PFEC sink buffer (see above). Those removed packets may be acknowledged back to the PFEC source as if they were successfully received or reconstructed at the PFEC sink. This allows the PFEC source to delete related payload packets stored in the PFEC source buffer that are used to construct redundancy packets that allow reconstruction of the packets before the data packet removed at the PFEC sink. Consequently, this reduces PFEC source buffer usage, as well as the algorithmic complexity for the computation of redundancy packets at the PFEC source.

Combining these mechanisms guarantees that the buffer sizes (i.e. RAM) are limited, and that an upper bound for an acceptable latency is obeyed.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of operating a communication network comprising a data source and a data sink which are connected with each other via a communication network path, the method comprising:
- storing data packets of a first data packet stream in a buffer of the data source,
- subjecting the stored data packets to a Forward Error Correction, FEC, process, including converting the first data packet stream into a second data packet stream comprising data packets of the first data packet stream and FEC packets, wherein converting the first data packet stream into a second data packet stream includes calculating FEC packets based on data packets of the first data packet stream, wherein a number of data packets of the first data packet stream based on which a FEC packet is calculated is variable, and
- transmitting the second data packet stream from the data source to the data sink,
- wherein, when a data packet of the first data packet stream is involved in the FEC process for a period of time which exceeds a predetermined first time threshold value, the data packet is dismissed for generating data packets of the second data packet stream and deleted from the buffer,
- receiving the second data packet stream at the data sink,
- storing the data packets of the second data packet stream in a buffer of the data sink,
- subjecting the stored data packets to a FEC process, including converting the second data packet stream into a third data packet stream comprising received data packets of the second data packet stream and data packets reconstructed by the FEC process,
- wherein, when a data packet of the second data packet stream is stored and involved in the FEC process for a period of time which exceeds a predetermined second time threshold value, the data packet is no longer used for generating data packets of the third data packet stream and deleted from the buffer,
- wherein the data sink informs the data source which of the data packets of the second data packet stream stored in the buffer of the data sink has been deleted from the buffer, or which of the data packets of the second data packet stream which has not yet been successfully received by the data sink does no longer need to be transmitted from the data source to the data sink.

2. The method according to claim 1, wherein the number of data packets of the first data packet stream based on which a FEC packet is calculated is increased if a number of outstanding acknowledgments of successful transmission or recovery of data packets of the second data packet stream from the data source to the data sink increases.

3. The method according to claim 1, wherein the first time threshold value depends on the type of application executed at the data source due to which the second data packet stream is transmitted from the data source to the data sink.

4. The method according to claim 1, wherein a first data packet stream is received at the data source, and wherein time stamp information is added to each data packet of the first data packet stream after reception at the data source, wherein the time stamp information indicates the time when the data packet is received at the data source or a time related thereto, and wherein data packets of the first data packet stream stored in the buffer at the data source are deleted from the buffer when a difference between the time indicated by the time stamp information and the current time exceeds the first time threshold value.

5. The method according to claim 1, wherein the second time threshold value depends on the type of application due to which the second data packet stream is transmitted from the data source to the data sink.

6. The method according to claim 1, wherein time stamp information is added to each data packet of the second data packet stream after reception at the data sink, wherein the time stamp information indicates the time when the data packet of the second data packet stream is received at the data sink or a time related thereto, and wherein data packets of the second data packet stream stored in the buffer at the data sink are deleted from the buffer when a difference between the time indicated by the time stamp information and the current time exceeds the second time threshold value.

7. The method according to claim 1, wherein the data source deletes a data packet stored in the buffer of the data source corresponding to the data packet of the second data packet stream which has not yet been received by the data sink, but does no longer need to be transmitted from the data source to the data sink.

8. The method according to claim 1, wherein the data source deletes data packets stored in the buffer of the data source which are, with regard to the first data packet stream, older in time than a data packet of the first data packet stream which corresponds to the data packet of the second data packet stream deleted from the buffer at the data sink.

9. The method according to claim 1, wherein the data source deletes data packets stored in the buffer of the data source which serve to generate FEC packets intended to restore second data packets at the data sink which are, with regard to the corresponding data packets of the first data packet stream, older in time than the data packet of the second data packet stream which has been deleted from the buffer at the data sink or which does no longer need to be transmitted from the data source to the data sink.

10. The method according to claim 1, wherein the data source deletes FEC packets stored in the buffer of the data source which serve to restore data packets of the second data packet stream at the data sink which are, with regard to the corresponding data packets of the first data packet stream, older in time than a data packet of the second data packet stream which does not need to be transmitted from the data source to the data sink any more.

11. The method according to claim 1, wherein the data sink informs the data source which of the data packets of the second data packet stream stored in the buffer of the data sink has been deleted or is no longer needed for transmission by indicating that the data packet of the second data packet stream has been successfully received or restored at the data sink.

12. A data source (21) connectable to a data sink (22) via a communication network path (23) of a communication network, comprising:
- a buffer unit (40) adapted to store data packets of a first data packet stream,
- a processing unit (41) connected to the buffer unit and adapted to subject the stored data packets to a FEC process, the processing unit converting the first data packet stream into a second data packet stream comprising data packets of the first data packet stream and FEC packets, wherein converting the first data packet stream into a second data packet stream includes calculating FEC packets based on data packets of the first data packet stream, wherein a number of data packets of the first data packet stream based on which a FEC packet is calculated is variable, and
- a transmitting unit (42) connected to the processing unit and adapted to transmit the second data packet stream from the data source to the data sink via the communication network path,
- wherein the processing unit is adapted to no longer use a received data packet of the first data packet stream for generating data packets of the second data packet stream and to delete the data packet from the buffer when the data packet of the first data packet stream is involved in the FEC process for a period of time which exceeds a predetermined first time threshold value,
- wherein the data source receives control signals from the data sink to inform the data source which of the data packets of the second data packet stream stored in a buffer of the data sink has been deleted from the buffer, or which of the data packets of the second data packet stream which has not yet been successfully received by the data sink does no longer need to be transmitted from the data source to the data sink.

13. A data sink connectable to a data source via a communication network path of a communication network, comprising:
- a receiving unit (50) adapted to receive a data packet stream from the data source via the communication network path,
- a buffer unit (52) connected to the receiving unit and adapted to buffer the received data packets of the received data packet stream,
- a processing unit (51) connected to the buffer unit and subjecting the stored data packets to a FEC process, the processing unit converting the received data packet stream into another data packet stream comprising received data packets of the received data packet stream and data packets reconstructed by the FEC process, wherein a number of data packets of the received data packet stream based on which a reconstruction of a data packet of the received data packet stream is reconstructed is variable,
- wherein the processing unit is adapted to dismiss a received data packet for generating data packets of the another data packet stream and to delete the data packet from the buffer if the data packet of the received data packet stream is involved in the FEC process for a period of time which exceeds a predetermined second time threshold value,
- wherein the data sink is adapted to inform the data source via control signals which of the data packets of the received data packet stream stored in the buffer of the data sink has been deleted from the buffer, or which of the data packets of the received data packet stream which has not yet been successfully received by the data sink does no longer need to be transmitted from the data source to the data sink.

## Patentansprüche

1. Verfahren zum Betreiben eines Kommunikationsnetzwerk, welches eine Datenquelle und eine Datensenke enthält, die über einen Kommunikationsnetzwerkpfad miteinander verbunden sind, wobei das Verfahren umfasst:
- Speichern der Datenpakete eines ersten Datenpaketflusses in einem Pufferspeicher der Datenquelle,
- Unterziehen der gespeicherten Datenpakete einem Vorwärtsfehlerkorrektur- bzw. FEC-Verfahren, umfassend das Konvertieren des ersten Datenpaketflusses in einen zweiten Datenpaketfluss, welcher die Datenpakete des ersten Datenpaketflusses und FEC-Pakete enthält, wobei das Konvertieren des ersten Datenpaketflusses in einen zweiten Datenpaketfluss das Kalkulieren von FEC-Paketen auf der Basis der Datenpakete des ersten Datenpaketflusses umfasst, wobei eine Anzahl von Datenpaketen des ersten Datenpaketflusses, auf dessen Basis ein FEC-Paket kalkuliert wird, variabel ist,
- Übertragen des zweiten Datenpaketflusses von der Datenquelle an die Datensenke,
- wobei, wenn ein Datenpaket des ersten Datenpaketflusses während einer Zeitdauer, welche einen vorbestimmten ersten Zeitgrenzwert überschreitet, an dem FEC-Verfahren beteiligt ist, das Datenpaket für die Erzeugung von Datenpaketen des zweiten Datenpaketflusses abgelehnt und aus dem Pufferspeicher gelöscht wird,
- Empfangen des zweiten Datenpaketflusses an der Datensenke,
- Speichern der Datenpakete des zweiten Datenpaketflusses in einem Pufferspeicher der Datensenke,
- Unterziehen der gespeicherten Datenpakete einem FEC-Verfahren, umfassend das Konvertieren des zweiten Datenpaketflusses in einen dritten Datenpaketfluss, welcher die empfangenen Datenpakete des zweiten Datenpaketflusses und die anhand des FEC-Verfahrens rekonstruierten Datenpakete umfasst,
- wobei, wenn ein Datenpaket des zweiten Datenpaketflusses gespeichert wurde und während einer Zeitdauer, welche einen vorbestimmten zweiten Zeitgrenzwert überschreitet, an dem FEC-Verfahren beteiligt ist, das Datenpaket nicht länger für die Erzeugung von Datenpaketen des dritten Datenpaketflusses verwendet und aus dem Pufferspeicher gelöscht wird,
- wobei die Datensenke der Datenquelle mitteilt, welches der in dem Pufferspeicher der Datensenke gespeicherten Datenpakete des zweiten Datenpaketflusses aus dem Pufferspeicher gelöscht wurde, oder welches der Datenpakete des zweiten Datenpaketflusses, welches noch nicht erfolgreich an der Datensenke empfangen wurde, nicht länger von der Datenquelle an die Datensenke übertragen werden muss.

2. Verfahren nach Anspruch 1, wobei die Anzahl der Datenpakete des ersten Datenpaketflusses, auf dessen Basis ein FEC-Paket kalkuliert wird, erhöht wird, wenn eine Anzahl von ausstehenden Bestätigungen der erfolgreichen Übertragung oder Wiedergewinnung von Datenpaketen des zweiten Datenpaketflusses von der Datenquelle an die Datensenke zunimmt.

3. Verfahren nach Anspruch 1, wobei der erste Zeitgrenzwert von der Art der an der Datenquelle ausgeführten Anwendung, aufgrund welcher der zweite Datenpaketfluss von der Datenquelle an die Datensenke übertragen wird, abhängt.

4. Verfahren nach Anspruch 1, wobei ein erster Datenpaketfluss an der Datenquelle empfangen wird, und wobei jedem Datenpaket des ersten Datenpaketflusses nach Empfang an der Datenquelle eine Zeitstempelinformation hinzugefügt wird, wobei die Zeitstempelinformation den Zeitpunkt, zu welchem das Datenpaket an der Datenquelle empfangen wird oder eine darauf bezogene Zeitangabe anzeigt, und wobei im Pufferspeicher an der Datenquelle gespeicherte Datenpakete des ersten Datenpaketflusses aus dem Pufferspeicher gelöscht werden, wenn eine Differenz zwischen der von der Zeitstempelinformation angezeigten Zeit und der aktuellen Zeit den ersten Zeitgrenzwert überschreitet.

5. Verfahren nach Anspruch 1, wobei der zweite Zeitgrenzwert von der Art der Anwendung, aufgrund welcher der zweite Datenpaketfluss von der Datenquelle an die Datensenke übertragen wird, abhängt.

6. Verfahren nach Anspruch 1, wobei jedem Datenpaket des zweiten Datenpaketflusses nach Empfang an der Datensenke eine Zeitstempelinformation hinzugefügt wird, wobei die Zeitstempelinformation den Zeitpunkt, zu welchem das Datenpaket des zweiten Datenpaketflusses an der Datensenke empfangen wird oder eine darauf bezogene Zeitangabe anzeigt, und wobei im Pufferspeicher an der Datensenke gespeicherte Datenpakete des zweiten Datenpaketflusses aus dem Pufferspeicher gelöscht werden, wenn eine Differenz zwischen der von der Zeitstempelinformation angezeigten Zeit und der aktuellen Zeit den zweiten Zeitgrenzwert überschreitet.

7. Verfahren nach Anspruch 1, wobei die Datenquelle ein im Pufferspeicher der Datenquelle gespeichertes Datenpaket, welches dem Datenpaket des zweiten Datenpaketflusses, welches noch nicht an der Datensenke empfangen wurde aber nicht länger von der Datenquelle an die Datensenke übertragen werden muss, entspricht, löscht.

8. Verfahren nach Anspruch 1, wobei die Datenquelle im Pufferspeicher der Datenquelle gespeicherte Datenpakete, welche in Bezug auf den ersten Datenpaketfluss zeitlich älter sind als ein Datenpaket des ersten Datenpaketflusses, welches dem aus dem Pufferspeicher an der Datensenke gelöschten Datenpaket des zweiten Datenpaketflusses entspricht, löscht.

9. Verfahren nach Anspruch 1, wobei die Datenquelle im Pufferspeicher der Datenquelle gespeicherte Datenpakete, die zur Erzeugung der für die Wiederherstellung von zweiten Datenpaketen an der Datensenke bestimmten FEC-Paketen dienen, welche in Bezug auf die entsprechenden Datenpakete des ersten Datenpaketflusses zeitlich älter sind als das Datenpaket des zweiten Datenpaketflusses, welches aus dem Pufferspeicher an der Datensenke gelöscht wurde und nicht länger von der Datenquelle an die Datensenke übertragen werden muss, löscht.

10. Verfahren nach Anspruch 1, wobei die Datenquelle im Pufferspeicher der Datenquelle gespeicherte FEC-Pakete, die zur Wiederherstellung von Datenpaketen des zweiten Datenpaketflusses an der Datensenke dienen, welche in Bezug auf die entsprechenden Datenpakete des ersten Datenpaketflusses zeitlich älter sind als ein Datenpaket des zweiten Datenpaketflusses, welches nicht länger von der Datenquelle an die Datensenke übertragen werden muss, löscht.

11. Verfahren nach Anspruch 1, wobei die Datensenke der Datenquelle mitteilt, welches der in dem Pufferspeicher der Datensenke gespeicherten Datenpakete des zweiten Datenpaketflusses gelöscht wurde oder nicht länger für die Übertragung benötigt wird, indem sie anzeigt, dass das Datenpaket des zweiten Datenpaketflusses erfolgreich empfangen oder an der Datensenke wiederhergestellt wurde.

12. Datenquelle (21), welche über einen Kommunikationsnetzwerkpfad (23) eines Kommunikationsnetzwerks mit einer Datensenke (22) verbunden werden kann, umfassend:
- Eine Pufferspeichereinheit (40), ausgelegt für die Speicherung von Datenpaketen eines ersten Datenpaketflusses,
- eine Verarbeitungseinheit (41), welche mit der Pufferspeichereinheit verbunden und dazu ausgelegt ist, die gespeicherten Datenpakete einem Vorwärtsfehlerkorrekturbzw. FEC-Verfahren zu unterziehen, wobei die Verarbeitungseinheit den ersten Datenpaketfluss in einen zweiten Datenpaketfluss konvertiert, welcher Datenpakete des ersten Datenpaketflusses und FEC-Pakete enthält, wobei das Konvertieren des ersten Datenpaketflusses in einen zweiten Datenpaketfluss das Kalkulieren von FEC-Paketen auf der Basis der Datenpakete des ersten Datenpaketflusses umfasst, wobei eine Anzahl von Datenpaketen des ersten Datenpaketflusses, auf dessen Basis ein FEC-Paket kalkuliert wird, variabel ist, und
- eine Übertragungseinheit (42), welche mit der Verarbeitungseinheit verbunden und für die Übertragung des zweiten Datenpaketflusses von der Datenquelle an die Datensenke über den Kommunikationsnetzwerkpfad ausgelegt ist,
- wobei die Verarbeitungseinheit dazu ausgelegt ist, ein empfangene Datenpaket des ersten Datenpaketflusses nicht länger für die Erzeugung von Datenpaketen des zweiten Datenpaketflusses zu verwenden und das Datenpaket aus dem Pufferspeicher zu löschen, wenn das Datenpaket des ersten Datenpaketflusses während einer Zeitdauer, welche einen vorbestimmten ersten Zeitgrenzwert überschreitet, an dem FEC-Verfahren beteiligt ist,
- wobei die Datenquelle Steuersignale von der Datensenke empfängt, um der Datenquelle mitzuteilen, welches der in dem Pufferspeicher der Datensenke gespeicherten Datenpakete des zweiten Datenpaketflusses aus dem Pufferspeicher gelöscht wurde, oder welches der Datenpakete des zweiten Datenpaketflusses, welches noch nicht erfolgreich an der Datensenke empfangen wurde, nicht länger von der Datenquelle an die Datensenke übertragen werden muss.

13. Datensenke, welche über einen Kommunikationsnetzwerkpfad eines Kommunikationsnetzwerks mit einer Datenquelle verbunden werden kann, umfassend:
- Eine Empfangseinheit (50), ausgelegt für den Empfang eines Datenpaketflusses von der Datenquelle über den Kommunikationsnetzwerkpfad,
- eine Pufferspeichereinheit (52), welche mit der Empfangseinheit verbunden und für die Zwischenspeicherung der empfangenen Datenpakete des empfangenen Datenpaketflusses ausgelegt ist,
- eine Verarbeitungseinheit (51), welche mit der Pufferspeichereinheit verbunden ist und die gespeicherten Datenpakete einem FEC-Verfahren unterzieht, wobei die Verarbeitungseinheit den empfangenen Datenpaketfluss in einen anderen Datenpaketfluss konvertiert, welcher empfangene Datenpakete des empfangenen Datenpaketflusses und anhand des FEC-Verfahrens rekonstruierte Datenpakete umfasst, wobei eine Anzahl von Datenpaketen des empfangenen Datenpaketflusses, auf dessen Basis ein Datenpaket des empfangenen Datenpaketflusses rekonstruiert wird, variabel ist,
- wobei die Verarbeitungseinheit dazu ausgelegt ist, ein empfangenes Datenpaket für die Erzeugung von Datenpaketen des anderen Datenpaketflusses abzulehnen und das Datenpaket aus dem Pufferspeicher zu löschen, wenn das Datenpaket des empfangenen Datenpaketflusses während einer Zeitdauer, welche einen vorbestimmten zweiten Zeitgrenzwert überschreitet, an dem FEC-Verfahren beteiligt ist,
- wobei die Datensenke dazu ausgelegt ist, der Datenquelle anhand von Steuersignalen mitzuteilen, welches der in dem Pufferspeicher der Datensenke gespeicherten Datenpakete des empfangenen Datenpaketflusses aus dem Pufferspeicher gelöscht wurde, oder welches der Datenpakete des empfangenen Datenpaketflusses, welches noch nicht erfolgreich an der Datensenke empfangen wurde, nicht länger von der Datenquelle an die Datensenke übertragen werden muss.

## Revendications

1. Procédé de fonctionnement d'un réseau de communication comprenant une source de données et un collecteur de données qui sont connectés l'une à l'autre par un chemin de réseau de communication, le procédé comprenant les étapes suivantes :
- stocker des paquets de données d'un premier flux de paquets de données dans une mémoire tampon de la source de données,
- soumettre les paquets de données stockés à un processus de correction d'erreurs sans voie de retour, FEC, comprenant la conversion du premier flux de paquets de données en un deuxième flux de paquets de données comprenant des paquets de données du premier flux de paquets de données et des paquets FEC, dans lequel la conversion du premier flux de paquets de données en un deuxième flux de paquets de données comprend le calcul de paquets FEC sur la base de paquets de données du premier flux de paquets de données, dans lequel un nombre de paquets de données du premier flux de paquets de données sur la base duquel un paquet FEC est calculé est variable, et
- transmettre le deuxième flux de paquets de données à partir de la source de données vers le collecteur de données,
- dans lequel, lorsqu'un paquet de données du premier flux de paquets de données est impliqué dans le processus FEC pendant une période qui dépasse une première valeur seuil de temps prédéterminée, le paquet de données est abandonné pour générer des paquets de données du deuxième flux de paquets de données et supprimé de la mémoire tampon,
- recevoir le deuxième flux de paquets de données au niveau du collecteur de données,
- stocker les paquets de données du deuxième flux de paquets de données dans une mémoire tampon du collecteur de données,
- soumettre les paquets de données stockés à un processus FEC, comprenant la conversion du deuxième flux de paquets de données en un troisième flux de paquets de données comprenant des paquets de données reçus du deuxième flux de paquets de données et des paquets de données reconstruits par le processus FEC,
- dans lequel, lorsqu'un paquet de données du deuxième flux de paquets de données est stocké et impliqué dans le processus FEC pendant une période qui dépasse une deuxième valeur seuil de temps prédéterminée, le paquet de données n'est plus utilisé pour générer des paquets de données du troisième flux de paquets de données et est supprimé de la mémoire tampon,
- dans lequel le collecteur de données indique à la source de données quel paquet de données parmi les paquets de données du deuxième flux de paquets de données stockés dans la mémoire tampon du collecteur de données a été supprimé de la mémoire tampon, ou quel paquet de données parmi les paquets de données du deuxième flux de paquets de données, qui n'a pas encore été reçu avec succès par le collecteur de données, n'a plus besoin d'être transmis à partir de la source de données vers le collecteur de données.

2. Procédé selon la revendication 1, dans lequel le nombre de paquets de données du premier flux de paquets de données sur la base duquel un paquet FEC est calculé est augmenté si un nombre de confirmations en attente de transmission ou de récupération réussie de paquets de données du deuxième flux de paquets de données à partir de la source de données vers le collecteur de données augmente.

3. Procédé selon la revendication 1, dans lequel la première valeur seuil de temps dépend du type d'application exécutée au niveau de la source de données grâce à laquelle le deuxième flux de paquets de données est transmis à partir de la source de données vers le collecteur de données.

4. Procédé selon la revendication 1, dans lequel un premier flux de paquets de données est reçu au niveau de la source de données, et dans lequel des informations d'estampille temporelle sont ajoutées à chaque paquet de données du premier flux de paquets de données après réception au niveau de la source de données, dans lequel les informations d'estampille temporelle indiquent le moment où le paquet de données est reçu au niveau de la source de données ou un moment qui lui est associé, et dans lequel des paquets de données du premier flux de paquets de données stockés dans la mémoire tampon au niveau de la source de données sont supprimés de la mémoire tampon lorsqu'une différence entre le moment indiqué par les informations d'estampille temporelle et le moment actuel dépasse la première valeur seuil de temps.

5. Procédé selon la revendication 1, dans lequel la deuxième valeur seuil de temps dépend du type d'application grâce à laquelle le deuxième flux de paquets de données est transmis à partir de la source de données vers le collecteur de données.

6. Procédé selon la revendication 1, dans lequel des informations d'estampille temporelle sont ajoutées à chaque paquet de données du deuxième flux de paquets de données après réception au niveau du collecteur de données, dans lequel les informations d'estampille temporelle indiquent le moment où le paquet de données du deuxième flux de paquets de données est reçu au niveau du collecteur de données ou un moment qui lui est associé, et dans lequel des paquets de données du deuxième flux de paquets de données stockés dans la mémoire tampon au niveau du collecteur de données sont supprimés de la mémoire tampon lorsqu'une différence entre le moment indiqué par les informations d'estampille temporelle et le moment actuel dépasse la deuxième valeur seuil de temps.

7. Procédé selon la revendication 1, dans lequel la source de données supprime un paquet de données stocké dans la mémoire tampon de la source de données correspondant au paquet de données du deuxième flux de paquets de données qui n'a pas encore été reçu par le collecteur de données, mais n'a plus besoin d'être transmis à partir de la source de données vers le collecteur de données.

8. Procédé selon la revendication 1, dans lequel la source de données supprime des paquets de données stockés dans la mémoire tampon de la source de données qui sont, par rapport au premier flux de paquets de données, antérieurs à un paquet de données du premier flux de paquets de données qui correspond au paquet de données du deuxième flux de paquets de données supprimé de la mémoire tampon au niveau du collecteur de données.

9. Procédé selon la revendication 1, dans lequel la source de données supprime des paquets de données stockés dans la mémoire tampon de la source de données qui servent à générer des paquets FEC destinés à restaurer des deuxièmes paquets de données au niveau du collecteur de données qui sont, par rapport aux paquets de données correspondants du premier flux de paquets de données, antérieurs au paquet de données du deuxième flux de paquet de données qui a été supprimé de la mémoire tampon au niveau du collecteur de données ou qui n'a plus besoin d'être transmis à partir de la source de données vers le collecteur de données.

10. Procédé selon la revendication 1, dans lequel la source de données supprime des paquets FEC stockés dans la mémoire tampon de la source de données qui servent à restaurer des paquets de données du deuxième flux de paquets de données au niveau du collecteur de données qui sont, par rapport aux paquets de données correspondants du premier flux de paquets de données, antérieurs à un paquet de données du deuxième flux de paquet de données qui n'a plus besoin d'être transmis à partir de la source de données vers le collecteur de données.

11. Procédé selon la revendication 1, dans lequel le collecteur de données indique à la source de données quel paquet de données parmi les paquets de données du deuxième flux de paquets de données stockés dans la mémoire tampon du collecteur de données a été supprimé ou n'est plus nécessaire pour la transmission en indiquant que le paquet de données du deuxième flux de paquets de données a été reçu ou stocké avec succès au niveau du collecteur de données.

12. Source de données (21) pouvant se connecter à un collecteur de données (22) par un chemin de réseau de communication (23) d'un réseau de communication, comprenant :
- une unité de mémoire tampon (40) adaptée pour stocker des paquets de données d'un premier flux de paquets de données,
- une unité de traitement (41) connectée à l'unité de mémoire tampon et adaptée pour soumettre les paquets de données stockés à un processus FEC, l'unité de traitement convertissant le premier flux de paquets de données en un deuxième flux de paquets de données comprenant des paquets de données du premier flux de paquets de données et des paquets FEC, dans laquelle la conversion du premier flux de paquets de données en un deuxième flux de paquets de données comprend le calcul de paquets FEC sur la base de paquets de données du premier flux de paquets de données, dans laquelle un nombre de paquets de données du premier flux de paquets de données sur la base duquel un paquet FEC est calculé est variable, et
- une unité de transmission (42) connectée à l'unité de traitement et adaptée pour transmettre le deuxième flux de paquets de données à partir de la source de données vers le collecteur de données par le chemin de réseau de communication,
- dans laquelle l'unité de traitement est adaptée pour ne plus utiliser un paquet de données reçu du premier flux de paquets de données afin de générer des paquets de données du deuxième flux de paquets de données et pour supprimer le paquet de données de la mémoire tampon lorsque le paquet de données du premier flux de paquets de données est impliqué dans le processus FEC pendant une période qui dépasse une première valeur seuil de temps prédéterminée,
- dans laquelle la source de données reçoit des signaux de commande provenant du collecteur de données pour indiquer à la source de données quel paquet de données parmi les paquets de données du deuxième flux de paquets de données stockés dans une mémoire tampon du collecteur de données a été supprimé de la mémoire tampon, ou quel paquet de données parmi les paquets de données du deuxième flux de paquets de données, qui n'a pas encore été reçu avec succès par le collecteur de données, n'a plus besoin d'être transmis à partir de la source de données vers le collecteur de données.

13. Collecteur de données pouvant se connecter à une source de données par un chemin de réseau de communication d'un réseau de communication, comprenant :
- une unité de réception (50) adaptée pour recevoir un flux de paquets de données à partir de la source de données par le chemin de réseau de communication,
- une unité de mémoire tampon (52) connectée à l'unité de réception et adaptée pour mettre en mémoire tampon les paquets de données reçus du flux de paquets de données reçu,
- une unité de traitement (51) connectée à l'unité de mémoire tampon et soumettant les paquets de données stockés à un processus FEC, l'unité de traitement convertissant le flux de paquet de données reçu en un autre flux de paquets de données comprenant des paquets de données reçus du flux de paquets de données reçu et des paquets de données reconstruits par le processus FEC, dans lequel un nombre de paquets de données du flux de paquets de données reçu sur la base duquel une reconstruction d'un paquet de données du flux de paquets de données reçu est reconstruite est variable,
- dans lequel l'unité de traitement est adaptée pour abandonner un paquet de données reçu afin de générer des paquets de données de l'autre flux de paquets de données et pour supprimer le paquet de données de la mémoire tampon si le paquet de données du flux de paquets de données reçu est impliqué dans le processus FEC pendant une période qui dépasse une deuxième valeur seuil de temps prédéterminée,
- dans lequel le collecteur de données est adapté pour indiquer à la source de données, par des signaux de commande, quel paquet de données parmi les paquets de données du flux de paquets de données reçu stockés dans la mémoire tampon du collecteur de données a été supprimé de la mémoire tampon, ou quel paquet de données parmi les paquets de données du flux de paquets de données reçu, qui n'a pas encore été reçu avec succès par le collecteur de données, n'a plus besoin d'être transmis à partir de la source de données vers le collecteur de données.
